# EUROPEAN PATENT APPLICATION

(11) **EP 4 443 194 A1**
(43) Date of publication of application: **09.10.2024**
(21) Application number: 21969517.8
(22) Date of filing: 30.12.2021
(51) Int. Cl.: G01S 17/02, G01S 17/89

(54) **CONTROL METHOD, LIDAR AND TERMINAL DEVICE**

(71) Applicant: Huawei Technologies Co., Ltd., Shenzhen, Guangdong 518129 (CN)
(72) Inventor: LI, Tianyu, Shenzhen, Guangdong 518129 (CN); WANG, Shuai, Shenzhen, Guangdong 518129 (CN); CAI, Zhonghua, Shenzhen, Guangdong 518129 (CN); YU, Anliang, Shenzhen, Guangdong 518129 (CN); WANG, Wei, Shenzhen, Guangdong 518129 (CN)
(74) Representative: Gill Jennings & Every LLP
(86) International application number: PCT/CN2021/142816
(87) International publication number: WO 2023/123150

(57) **Abstract**

A control method, a lidar, and a terminal device are provided, to improve detection flexibility in the sensing field. The method includes: A control apparatus controls a receiving optical system to receive a first echo signal reflected by a target object (501), and controls a detector to convert the first echo signal into an electrical signal by using a first pixel configuration, where in the first pixel configuration, different regions of the detector have different pixel configurations, or the detector has different pixel configurations in different time periods (502). In this way, the detector can convert, based on the different pixel configurations, echo signals received in the different regions or in the different time periods into differentiated electrical signals, so that pixel density in generated point cloud data can also be flexibly adjusted based on an actual pixel configuration manner. This effectively improves detection flexibility.

## Description

### TECHNICAL FIELD

This application relates to the field of sensing technologies, and in particular, to the field of laser detection, and provides a control method, a lidar, and a terminal device.

### BACKGROUND

A lidar (light detection and ranging, LiDAR) is an optical measurement device. A working principle of the lidar is to transmit laser signals to an object, receive echo signals reflected by the object, and compare the echo signals with the laser signals to obtain related parameters such as a distance and a speed of the object. The lidar can accurately scan a surrounding object to form a high-definition image. This helps quickly identify the surrounding object and make a decision. Currently, the lidar is widely used in scenarios such as intelligent vehicles, smart transportation, three-dimensional city mapping, and atmospheric environment monitoring.

However, currently, a detection manner of the lidar is usually set based on a hardware configuration of the lidar. When the hardware configuration of the lidar is better, pixel density on an image detected by the lidar is higher. When the hardware configuration of the lidar is poorer, pixel density on an image detected by the lidar is lower. The current detection manner cannot well meet a requirement of a user, and is not conducive to improving detection flexibility.

In view of this, this application provides a control method, to improve detection flexibility.

### SUMMARY

This application provides a control method, a lidar, and a terminal device, to improve detection flexibility.

According to a first aspect, this application provides a control method. The method is applicable to a control apparatus. The method includes: The control apparatus controls a receiving optical system to receive a first echo signal reflected by a target object, and controls a detector to convert the first echo signal into an electrical signal by using a first pixel configuration. Specifically, the first echo signal includes a reflected signal corresponding to a first detection signal. In the first pixel configuration, different regions of the detector have different pixel configurations, and/or the detector has different pixel configurations in different time periods. According to the control method, the detector is configured to use the different pixel configurations in the different regions and/or the different time periods by using software, so that after receiving an echo signal, the detector can convert, based on the different pixel configurations, the echo signals received in the different regions and/or the different time periods into differentiated electrical signals, and pixel density (namely, a quantity of pixels in an image per unit area corresponding to point cloud data) in the point cloud data generated based on the differentiated electrical signals can also be flexibly adjusted based on an actual pixel configuration manner. This improves detection flexibility. Further, in this manner, the detector may be configured to implement a pixel configuration by using software. Therefore, dependency on a hardware configuration of a lidar in a detection process can be reduced, and detection flexibility can be further improved.

It should be noted herein that the first echo signal may include reflected signals corresponding to all detection signals, may include only reflected signals corresponding to some detection signals, or may further include some ambient noise signals. This is not specifically limited.

In a possible design, the first echo signal may be presented as a linear spot, to implement a scanning mode of line scanning-line receiving.

In a possible design, the first echo signal may be presented as a staggered spot, and the staggered spot is a spot staggered in a horizontal direction and/or a vertical direction of the detector. The detector is a device including a plurality of rows and columns of cells. The horizontal direction of the detector is a direction defined by one row of cells, and the vertical direction of the detector is a direction defined by one column of cells. When the lidar scans an object in the horizontal direction, the staggered spot is a spot in at least two parts of spots that are staggered in the horizontal direction of the detector. When the lidar scans the object in the vertical direction, the staggered spot is a spot in at least two parts of spots that are staggered in the vertical direction of the detector. When the lidar scans the object in an oblique direction, the staggered spot is a spot in at least two parts of spots that are staggered in a direction corresponding to the oblique direction on the detector, that is, staggered in both the horizontal direction and the vertical direction of the detector. Regions in which cells that are used to generate neighboring pixels and that are on the detector are located can be staggered by using the staggered spot, so as to reduce crosstalk between regions in which the cells of the neighboring pixels are located, improve isolation between the regions in which the cells of the neighboring pixels are located, and further improve point cloud quality.

In a possible design, the different regions of the detector may be different sub-regions, on the detector, in a region on which the first echo signal is focused, and quantities of cells corresponding to all pixel in pixel configurations corresponding to the different regions may be different. A total quantity of cells used to generate pixels on the detector is fixed. When the quantities of cells corresponding to all pixel in pixel configurations corresponding to the different regions are different, quantities of pixels that can be generated in different regions corresponding to the fixed quantity of cells are also different, so that pixel density of two regions on the presented point cloud data is different, and a region with higher pixel density corresponds to higher angular resolution. It can be learned that in this pixel configuration manner, pixel encryption can be performed on a specific region on the finally presented point cloud data, to flexibly improve angular resolution of the specific region.

In a possible design, the different regions in the detector may be a region corresponding to a central field of view region of a lidar and a region corresponding to a non-central field of view region. The central field of view region is a region within a preset angle range in front of the lidar. In this design, the central field of view region and the non-central field of view region correspond to different pixel configurations, so that pixel density of the central field of view region and pixel density of the non-central field of view region on the point cloud data can be different, and angular resolution of the central field of view region and the non-central field of view region detected by the lidar is flexibly adjusted.

In a possible design, a quantity of cells corresponding to each pixel in a pixel configuration corresponding to the central field of view region may be less than a quantity of cells corresponding to each pixel in a pixel configuration corresponding to the non-central field of view region. A quantity of cells corresponding to one pixel is a quantity of pixels used to generate one pixel. A total quantity of cells used to generate pixels on the detector is fixed. When the quantity of cells corresponding to one pixel is larger, the fixed quantity of pixels can be used to generate fewer pixels, so that pixel density on the point cloud data is lower, and when the quantity of cells corresponding to one pixel is smaller, the fixed quantity of pixels can be used to generate more pixels, so that pixel density on the point cloud data is higher. In this way, the quantity of cells corresponding to each pixel in the pixel configuration corresponding to the central field of view region is less than the quantity of cells corresponding to each pixel in the pixel configuration corresponding to the non-central field of view region, so that the central field of view region on the finally presented point cloud data has higher pixel density than the non-central field of view region, and the central field of view region has higher angular resolution than the non-central field of view region. This reduces unnecessary power consumption of the lidar while maintaining necessary detection accuracy of the central field of view region.

In a possible design, the different regions of the detector may be a region in which the target object is presented in the detector and a region other than the region in which the target object is presented. Before the control apparatus controls the detector to convert the first echo signal into the electrical signal by using the first pixel configuration, the method further includes: controlling the detector to convert a second echo signal into an electrical signal by using a second pixel configuration, where the second echo signal includes a reflected signal corresponding to a second detection signal. For the region in which the target object is presented in the detector, a quantity of cells corresponding to each pixel in the first pixel configuration is less than a quantity of cells corresponding to each pixel in the second pixel configuration, and for the region other than the region in which the target object is presented in the detector, a quantity of cells corresponding to each pixel in the first pixel configuration is equal to a quantity of cells corresponding to each pixel in the second pixel configuration. In this way, the region corresponding to the target object in the finally presented point cloud data can have higher angular resolution than a region corresponding to a non-target object. This helps reduce unnecessary power consumption of the lidar while ensuring that the target object can be accurately detected.

In a possible design, the different time periods include a first time period and a second time period, the first time period corresponds to a pixel configuration 1, the second time period corresponds to a pixel configuration 2, quantities of cells corresponding to all pixels in the pixel configuration 1 and the pixel configuration 2 are the same, a region including cells in a working state in the pixel configuration 1 and a region including cells in a working state in the pixel configuration 2 are staggered in the horizontal direction and/or the vertical direction of the detector, and a staggered distance is less than a cell distance corresponding to one pixel. When the first echo signal is presented as a horizontal linear spot on the detector, the region including the cells in a working state in the pixel configuration 1 and the region including the cells in a working state in the pixel configuration 2 may be staggered in the horizontal direction of the detector. When the first echo signal is presented as a vertical linear spot on the detector, the region including the cells in a working state in the pixel configuration 1 and the region including the cells in a working state in the pixel configuration 2 may be staggered in the vertical direction of the detector. When the first echo signal is presented as an oblique linear spot on the detector, the region including the cells in a working state in the pixel configuration 1 and the region including the cells in a working state in the pixel configuration 2 may be staggered in the oblique direction of the detector, that is, staggered in both the horizontal direction and the oblique direction. In this way, there may also be a misalignment relationship between pixels generated in the pixel configuration 1 and the pixel configuration 2. The misalignment can enable a pixel generated in one pixel configuration to be inserted between any two adjacent pixels generated in another pixel configuration, so as to increase a quantity of pixels included in the point cloud data. It can be learned that, even if the lidar cannot improve the angular resolution based on the hardware configuration, overall angular resolution of the lidar can be further improved by configuring staggered cells by using software.

In a possible design, the different time periods include a first time period and a second time period, the first time period corresponds to a pixel configuration 1, the second time period corresponds to a pixel configuration 2, cells in a working state in the pixel configuration 1 and the pixel configuration 2 are the same, and a quantity of cells corresponding to each pixel in the pixel configuration 1 is greater than a quantity of cells corresponding to each pixel in the pixel configuration 2. In this way, pixel density in point cloud data generated based on the pixel configuration 2 can be higher than pixel density in point cloud data generated based on the pixel configuration 2, so as to flexibly improve the detected angular resolution in a required time period.

In a possible design, the different time periods may correspond to any one of the following time periods: time periods corresponding to different first echo signals returned through detection of a same region of the target object, a time period corresponding to a first echo signal returned through detection of different regions of the target object, or time periods corresponding to first echo signals returned through different times of detection of the entire target object. In this way, the pixel configuration can be flexibly adjusted in a proper time period based on an actual requirement, thereby increasing scenarios to which the control method is applicable.

In a possible design, the control apparatus may further receive an upgrade instruction, where the upgrade instruction includes a third pixel configuration. The control apparatus controls the detector to convert a third echo signal into an electrical signal by using the third pixel configuration, where the third echo signal includes a reflected signal corresponding to a third detection signal. In this way, the pixel configuration of the detector is updated by upgrading software. This is easy to implement without improving hardware of the lidar, and pixel configuration requirements of a user for different scenarios can be matched as much as possible, thereby helping improve flexibility of lidar detection.

In a possible design, the upgrade instruction may be sent by using a master computer, or the pixel configuration may be updated in an over-the-air (over-the-air, OTA) manner, to implement unified management and control of the upgrade pixel configuration of the lidar.

According to a second aspect, this application provides a control apparatus, including at least one processor and an interface circuit. The interface circuit is configured to provide data or code instructions for the at least one processor, and the at least one processor is configured to implement the method according to any design of the first aspect by using a logic circuit or by executing the code instructions.

According to a third aspect, this application provides a chip, including a processor and an interface. The processor is configured to read instructions through the interface, to perform the method according to any design of the first aspect.

According to a fourth aspect, this application provides a lidar, including a control apparatus, a receiving optical system, and a detector. The control apparatus is configured to perform the control method according to any design of the first aspect, the receiving optical system is configured to receive an echo signal, and the detector is configured to convert the echo signal into an electrical signal.

In a possible design, the lidar may further include a transmitter and a transmitting optical system. The transmitter is configured to emit a detection signal under control of the control apparatus, and the transmitting optical system is configured to transmit the detection signal.

In a possible design, the detector may include a single photon avalanche diode (single photon avalanche diode, SPAD) detector array.

In a possible design, the lidar may further include a scanning mechanism, where the scanning mechanism includes one or more of a multi-faceted rotating mirror, an oscillating mirror, a micro-electro-mechanical system (micro-electro-mechanical system, MEMS) scanning mirror, or a prism.

In a possible design, the lidar may further include a processing module, where the processing module is configured to process the electrical signal to obtain point cloud data.

In a possible design, the processing module may further determine a target feature based on the point cloud data.

In a possible design, the control apparatus and the processing module are integrated into a system on chip (system on chip, SOC).

According to a fifth aspect, this application provides a terminal device, including the lidar according to any design of the fourth aspect. For example, examples of some terminal devices include but are not limited to: a smart home device (for example, a television, a robotic vacuum cleaner, a smart desk lamp, a speaker system, an intelligent lighting system, an electric appliance control system, a home background music system, a home theater system, an intercom system, or a video surveillance system), an intelligent transportation device (for example, a vehicle, a ship, an unmanned aerial vehicle, a train, a freight car, or a truck), an intelligent manufacturing device (for example, a robot, an industrial device, intelligent logistics, or a smart factory), and an intelligent terminal (a mobile phone, a computer, a tablet computer, a palmtop computer, desktop computer, a headset, a speaker, a wearable device, a vehicle-mounted device, a virtual reality device, an augmented reality device, or the like).

According to a sixth aspect, this application provides a computer-readable storage medium. The computer-readable storage medium stores a computer program, and when the computer program is run, the method according to any design of the first aspect is performed.

According to a seventh aspect, this application provides a computer program product. When the computer program product runs on a processor, the method according to any design of the first aspect is implemented.

For beneficial effects of the second aspect to the seventh aspect, refer to the technical effects that can be achieved in corresponding designs in the first aspect. Details are not described herein again.

### BRIEF DESCRIPTION OF DRAWINGS

FIG. 1 is an example of a schematic diagram of an application scenario of a lidar according to an embodiment of this application;
FIG. 2 is an example of a schematic diagram of an internal architecture of a lidar according to an embodiment of this application;
FIG. 3 is an example of a schematic diagram of a pixel configuration of a detector according to an embodiment of this application;
FIG. 4 is an example of a schematic diagram of partitioning of field of view of a lidar according to an embodiment of this application;
FIG. 5 is an example of a schematic flowchart of a control method according to an embodiment of this application;
FIG. 6 is an example of a schematic diagram of a pixel configuration manner of a detector according to an embodiment of this application;
FIG. 7 is an example of a schematic diagram of another pixel configuration manner of a detector according to an embodiment of this application;
FIG. 8 is an example of a schematic diagram of still another pixel configuration manner of a detector according to an embodiment of this application;
FIG. 9 is an example of a schematic diagram of an adjustment time period of a pixel configuration according to an embodiment of this application;
FIG. 10 is an example of a schematic diagram of yet another pixel configuration manner of a detector according to an embodiment of this application; and
FIG. 11 is an example of a schematic diagram of still yet another pixel configuration manner of a detector according to an embodiment of this application.

### DESCRIPTION OF EMBODIMENTS

A control method disclosed in this application may be applied to a terminal device having a detection capability, and in particular, is applicable to a terminal device having a laser detection capability. The terminal device may be an intelligent device having a laser detection capability, including but not limited to: a smart home device, for example, a television, a robotic vacuum cleaner, a smart desk lamp, a speaker system, an intelligent lighting system, an electric appliance control system, a home background music system, a home theater system, an intercom system, or a video surveillance system; an intelligent transportation device, for example, a vehicle, a ship, an unmanned aerial vehicle, a train, a freight car, or a truck; an intelligent manufacturing device, for example, a robot, an industrial device, intelligent logistics, or a smart factory. Alternatively, the terminal device may be a computer device having a laser detection capability, for example, a desktop computer, a personal computer, a server, or the like. It should be further understood that the terminal device may alternatively be a portable electronic device having a laser detection capability, for example, a mobile phone, a tablet computer, a palmtop computer, a headset, a speaker, a wearable device (such as a smartwatch), a vehicle-mounted device, a virtual reality device, an augmented reality device, or the like. An example of the portable electronic device includes but is not limited to a portable electronic device using iOS^{®}, android^{®}, microsoft^{®}, Harmony^{®}, or another operating system. The portable electronic device may alternatively be, for example, a laptop computer (Laptop) with a touch-sensitive surface (for example, a touch panel).

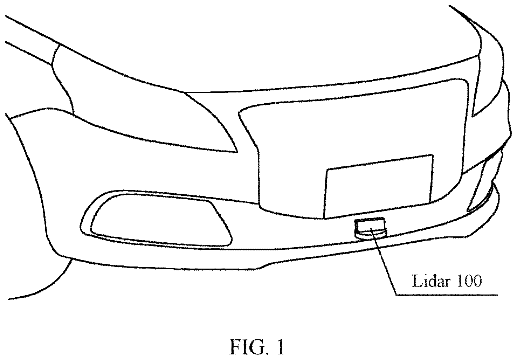

In a specific application scenario, the control method may be applied to a lidar. FIG. 1 is an example of a schematic diagram of an application scenario of a lidar according to an embodiment of this application. In this example, a lidar 100 is installed on a vehicle, and therefore is also referred to as a vehicle-mounted lidar. In addition to the vehicle-mounted lidar, the lidar further includes a shipborne lidar installed on a ship and an airborne lidar installed on a machine. In a possible example, as shown in FIG. 1, the lidar 100 may be specifically installed at a head location of the vehicle. During driving of the vehicle, the lidar 100 may send a laser signal. The laser signal is reflected by an object in front of the vehicle after being irradiated to the object, and a reflected echo signal may be received by the lidar 100. Then, the lidar 100 detects, based on the echo signal, information about an obstacle in front of the vehicle, such as a size and a distance of the obstacle, so as to implement a driving function of the vehicle by using the information about the obstacle, for example, including but not limited to automatic driving or assisted driving.

It should be noted that the lidar 100 may be one of a mechanical lidar, a liquid-state lidar, a pure solid-state lidar, or a hybrid solid-state lidar (which is also referred to as a semi-solid-state lidar), or may be another type of lidar. This is not specifically limited in embodiments of this application.

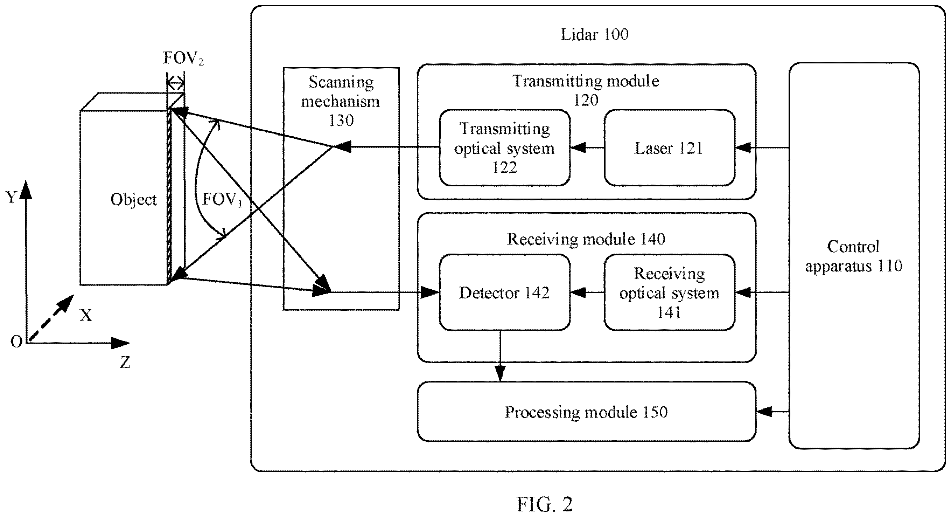

Further, for example, FIG. 2 is a schematic diagram of an internal architecture of a lidar according to an embodiment of this application. As shown in FIG. 2, in this example, the lidar 100 may include a control apparatus 110, a transmitting module 120, a scanning mechanism 130, a receiving module 140, and a processing module 150. The transmitting module 120 includes a laser 121 and a transmitting optical system 122, and the receiving module 140 includes a receiving optical system 141 and a detector 142. In the lidar 100, the control apparatus 110 may have a signal control capability, and may be connected to another component, for example, including but not limited to the transmitting module 120, the scanning mechanism 130, the receiving module 140, and the processing module 150, in the lidar 100 through a controller area network (controller area network, CAN) bus or in another manner. The laser 121 is a device capable of transmitting a laser, and a type of the laser 121 may be any one of a semiconductor laser, a gas laser, an optical fiber laser, a solid-state laser, a dye laser, a diode laser, or an excimer laser. The transmitting optical system 122 and the receiving optical system 141 are systems including optical elements. The optical elements include but are not limited to a lens, a light filter, a polarizer, a reflector, a beam splitter, a prism, a window sheet, and a scattering sheet. The scanning mechanism 130 may include one or more of a multi-faceted rotating mirror, an oscillating mirror, a micro-electro-mechanical system (micro-electro-mechanical system, MEMS) scanning mirror, or a prism. The detector 142 may include but is not limited to an avalanche photo diode (avalanche photo diode, APD), a single photon avalanche diode (single photon avalanche diode, SPAD), a photodiode (positive intrinsic-negative, PIN), and a silicon photo multiplier (silicon photo multiplier, SiPM). The processing module 150 may have a signal processing capability, and may be connected to the detector 142 through the CAN bus or in another manner.

It should be noted that the control apparatus 110 and the processing module 150 may be integrated into one component for implementation, or may be separately implemented in a plurality of components. For example, the control apparatus 110 and the processing module 150 may be integrated into one component for implementation. The component may be specifically an integrated circuit chip, for example, may be a general-purpose processor, a field programmable gate array (field programmable gate array, FPGA), an application-specific integrated chip (application-specific integrated circuit, ASIC), a system on chip (system on chip, SoC), a network processor (network processor, NP), a digital signal processor (digital signal processor, DSP), a micro controller unit (micro controller unit, MCU), a programmable controller (programmable logic device, PLD), another programmable logic device, a discrete gate or a transistor logic device, a discrete hardware component, or another integrated chip. The device may include a central processing unit (central processor unit, CPU), a neural-network processing unit (neural-network processing unit, NPU), and a graphics processing unit (graphics processing unit, GPU), and may further include an application processor (application processor, AP), a modem processor, an image signal processor (image signal processor, ISP), a video codec, a digital signal processor (digital signal processor, DSP), a baseband processor, and/or the like. This is not specifically limited.

In implementation, the control apparatus 110 may control the laser 121 to send a detection signal (for example, a pulse laser), and control the transmitting optical system 122 to transmit the detection signal from the laser 121, and may further control the scanning mechanism 130 to scan and traverse a detection region by using the detection signal. It should be noted that, the scanning mechanism 130 is not a mandatory component, and a traversal function that can be implemented by the scanning mechanism 130 may also be essentially implemented by using an array design inside the transmitting module 120 and the receiving module 130 and an array control apparatus. Further, the detection signal is reflected by the object after the object in the detection region is scanned. The reflected echo signal is received by the receiving optical system 141 and transmitted to the detector 142 under control of the control apparatus 110. Then, the detector 142 converts the optical echo signal into an electrical signal and sends the electrical signal to the processing module 150, and the processing module 150 analyzes the electrical signal under control of the control apparatus 110 to generate point cloud data. The point cloud data may be used to obtain target information like a distance, an orientation, a height, a speed, a posture, and even a shape of an object, and subsequently, may be further used to plan automatic driving or assisted driving of the vehicle in combination with other sensor information of the vehicle.

In an optional implementation, the transmitting optical system 122 and the receiving optical system 141 may scan an object in a scanning mode of line scanning-line receiving. For example, still refer to FIG. 2. After being transmitted by the transmitting optical system 122, the detection signal sent by the laser 121 is displayed as a linear spot on a YOX plane. After being adjusted by the scanning mechanism 130, the linear spot scans a linear region (that is, a region, on the object, filled with slashes shown in FIG. 2) that is on the object and that corresponds to a vertical field of view FOV₁ each time. In addition, the control apparatus 110 may control the laser 121 to repeatedly send a plurality of detection signals in a form of pulse laser to detect a same linear region on the object, and a quantity of detection signals may be set to, for example, a value between 10 and 500. After scanning a linear region by using a plurality of detection signals, the scanning mechanism 130 controls a plurality of detection signals subsequently sent by the transmitting optical system 122 to move to a next linear region in a positive direction of an X axis shown in the figure, until a region corresponding to an entire horizontal field of view FOV₂ is scanned, and determines that the detection region is traversed. Correspondingly, after being reflected by the object, the linear spot emitted by the transmitting optical system 122 is still a linear spot. The linear spot is transmitted back to the receiving optical system 141 by using the scanning mechanism 130, and is transmitted in the receiving optical system 141 and focused on a photosensitive surface of the detector 142. The detector 142 converts a signal received on the photosensitive surface into an electrical signal, and sends the electrical signal to the processing module 150. Then, the processing module 150 generates point cloud data corresponding to each linear region, and then generates a frame of image based on point cloud data of each linear region.

It should be understood that, the spot adjusted by the scanning mechanism 130 shown in FIG. 2 is a linear spot parallel to a Y axis. This is merely a possible design. A presentation form of the spot is not specifically limited in embodiments of this application. For example, in some other designs, the linear spot adjusted by the scanning mechanism 130 may alternatively be parallel to the X axis. In addition, the linear spot is used to scan a linear region that is on the object and that corresponds to a horizontal field of view FOV₂ each time, and moves in a positive direction or a negative direction of the Y axis shown in the figure, until a region corresponding to the entire vertical field of view FOV₁ is scanned. Alternatively, in some other designs, the linear spot adjusted by the scanning mechanism 130 may be an oblique linear spot that has an included angle with both the X axis and the Y axis, and may move in a positive direction or a negative direction of the X axis, a positive direction or a negative direction of the Y axis, or another direction on the XOY plane shown in the figure, until regions corresponding to the entire vertical field of view FOV₁ and the entire horizontal field of view FOV2 are scanned. Alternatively, in some other designs, some optical lenses may be disposed at special positions of the transmitting optical system 122, so that the pulse laser emitted by the laser 121 is converted into a staggered spot (for a presentation form, refer to the following embodiment, and details are not described herein) or another special-shaped spot under actions of these optical lenses, to adapt to more detection scenarios.

The following describes in detail the technical solutions in embodiments of this application with reference to specific accompanying drawings. Before specific embodiments are described, some terms used in the following are first described as examples.

### (1) Cell and pixel configuration of the detector.

In this embodiment of this application, the detector may be an array structure including a plurality of rows and columns of cells. The cell is a minimum unit that can receive an echo signal in the detector. A direction defined by one row of cells is referred to as a horizontal direction of the detector, and a direction defined by one column of cells is referred to as a vertical direction of the detector. In a use process of the detector, a status of each cell may be a working state or a non-working state. When the cell is in a working state, the cell can convert the received echo signal into an electrical signal. When the cell is in a non-working state, the cell does not convert the echo signal into an electrical signal regardless of whether an echo signal exists on the cell. Generally, echo signals that can be received by one cell are limited, and a manner of generating a pixel based on the echo signal received by a single cell causes a poor signal-to-noise ratio. Therefore, in an actual operation, the detector usually generates the pixel by combining the plurality of rows and columns of cells. In other words, the detector combines a plurality of echo signals received by the plurality of rows and columns of cells into one electrical signal, and sends the electrical signal to the processing module, and the processing module generates one pixel in point cloud data.

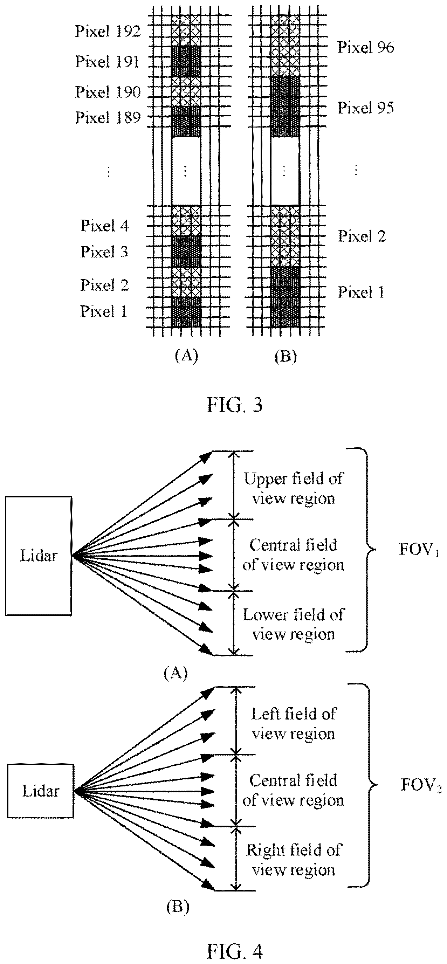

Further, the pixel configuration of the detector may include cells in the detector that are in a working state, and for the cells in a working state, the detector generates the pixel in a manner of combining several rows and several columns of cells. For example, FIG. 3 is an example of a schematic diagram of a pixel configuration of a detector according to an embodiment of this application. In this example, the detector is an array structure including 549 rows and seven columns of cells, each grid in the array structure corresponds to one cell, and the control apparatus controls 3×547 cells located in a long-strip-shaped region shown in the figure to be in a working state, and controls other pixels located outside a rectangular box shown in the figure to be in a non-working state.

(A) in FIG. 3 is a schematic diagram of pixel generation corresponding to a 3×3 pixel configuration used by the detector. As shown in (A) in FIG. 3, in the 3×3 pixel configuration, every 3×3 cells in the detector correspond to one pixel. To be specific, the detector combines echo signals received by every nine cells of three rows and three columns into one electrical signal and sends the electrical signal to the processing module, and then, the processing module generates one pixel in the point cloud data. In this case, the processing module generates 192 pixels for each linear region shown in the figure in the detector.

(B) in FIG. 3 is a schematic diagram of pixel generation corresponding to a 3×6 pixel configuration used by the detector. As shown in (B) in FIG. 3, in the 3×6 pixel configuration, every 3×6 cells in the detector correspond to one pixel. To be specific, the detector combines echo signals received by every 3×6 cells into one electrical signal and sends the electrical signal to the processing module, and then, the processing module generates one pixel in the point cloud data. In this case, the processing module generates 96 pixels for each linear region shown in the figure in the detector.

### (2) Different pixel configurations.

In this embodiment of this application, because the pixel configuration of the detector includes cells in the detector that are in a working state, and for the cells in a working state, the detector generates the pixel in a manner of combining several rows and several columns of cells, that the detector uses different pixel configurations may mean that the cells in a working state in the detector are different, and/or for the cells in a working state, the detector generates the pixel in different manners of combining the cells. For specific implementation of this part of content, refer to the following embodiment. Details are not described herein.

### (3) Quantity of cells corresponding to one pixel.

In this embodiment of this application, the quantity of cells corresponding to one pixel is a total quantity of cells of a plurality of rows and columns used to generate one pixel based on the pixel configuration of the detector. For example, when the 3×3 pixel configuration is used, one pixel is generated by using echo signals received by nine cells of three rows and three columns, and therefore, it is considered that the quantity of cells corresponding to one pixel is 9. When the 3×6 pixel configuration is used, one pixel is generated by echo signals received by 18 pixels in six rows and three columns, and therefore, it is considered that the quantity of cells corresponding to one pixel is 18.

In some other examples, the quantity of cells corresponding to one pixel may alternatively be a quantity of cells of a plurality of rows in cells of the plurality of rows and columns used to generate one pixel based on the pixel configuration of the detector. For example, when the 3×3 pixel configuration is used, it may alternatively be considered that the quantity of cells corresponding to one pixel is 3, and when the 3×6 pixel configuration is used, it may be considered that the quantity of cells corresponding to one pixel is 6.

### (4) Cell distance corresponding to one pixel.

In this embodiment of this application, the cell distance corresponding to one pixel is a height (which is also referred to as a total side length of cells of the plurality of rows) of cells of the plurality of rows in cells of the plurality of rows and columns used to generate one pixel based on the pixel configuration of the detector. For example, it is assumed that a height of one cell is 1 µm, when the 3×3 pixel configuration is used, a cell distance corresponding to one pixel is a height of three rows of cells, that is, 3 µm; and when the 3×6 pixel configuration is used, a cell distance corresponding to one pixel is a height of six rows of cells, that is, 6 µm.

### (5) Cell region corresponding to one pixel.

In this embodiment of this application, the cell region corresponding to one pixel is a region including the plurality of rows and columns of cells used to generate one pixel based on the pixel configuration of the detector. For example, when the 3×3 pixel configuration is used, the cell region corresponding to one pixel is a region including nine cells of three rows and three columns, for example, each square region shown in (A) in FIG. 3; and when the 3×6 pixel configuration is used, the cell region corresponding to one pixel is a region including 18 pixels of six rows and three columns, for example, each rectangular region shown in (B) in FIG. 3.

### (6) Different regions of the detector.

In this embodiment of this application, in an entire detection process, the scanning mechanism focuses an echo signal on some same cells of the detector each time. For example, when the vertical linear spot shown in FIG. 2 is used to scan an object, the echo signal is focused on the cells in the long-strip-shaped region shown in (A) in FIG. 3 or (B) in FIG. 3 each time. The long-strip-shaped region may be preconfigured based on an internal component setting of the lidar. For ease of understanding, in the following embodiments of this application, a region, on the detector, including the cells on which the echo signal is focused is referred to as a focus region of the detector. Based on this, the different regions of the detector may be different sub-regions in the focus region of the detector. For example, an upper half part and a lower half part of the long-strip-shaped region shown in (A) in FIG. 3 or (B) in FIG. 3 belong to different regions of the detector.

### (7) Different time periods.

In this embodiment of this application, for each detection region (the linear region shown in FIG. 2) on the target object, the control apparatus may control the laser in the transmitting module to emit a plurality of detection signals in a form of pulse laser. For example, it is assumed that a quantity of detection signals is 6, the scanning apparatus horizontally scans the target object at a speed of 1°/ms in the direction shown in FIG. 2, and a horizontal field of view of the lidar is 20°. In this case, in first detection, the control apparatus may control the laser to repeatedly emit six laser detection signals within 1 ms, so as to detect a linear region in the leftmost 1° range in an entire field of view of the lidar shown in the figure. In second detection, the control apparatus further controls the laser to repeatedly emit other six laser detection signals within 1 ms, so as to detect a next linear region in a left 1° to 2° range in the entire field of view of the lidar shown in the figure. After 20 times of detection are performed, the control apparatus determines that the scanning mechanism completes one complete scanning, then may control the processing module to generate a frame of image based on point cloud data obtained through the 20 times of detection, and then repeat the foregoing process to generate a next frame of image.

Based on the foregoing content, in this embodiment of this application, the different time periods may be any two different time periods in the entire detection process of the lidar. For example, the different time periods may be time periods in any one of the following cases.
Case 1: The different time periods are time periods corresponding to different echo signals returned through detection of a same region of the object. For example, it is assumed that six detection signals are used to detect a same region of the object, six echo signals are correspondingly received in the focus region of the detector for the same region, and time periods in which any two or any two parts of the six echo signals are focused on the focus region of the detector are different time periods. For example, a time period in which the first three echo signals are focused on the focus region of the detector is a first time period, a time period in which the last three echo signals are focused on the focus region of the detector is a second time period, and the first time period and the second time period are different time periods.
Case 2: The different time periods are time periods corresponding to echo signals returned through detection of different regions of the object. For example, it is assumed that six detection signals are used to detect a same region of the object, six corresponding echo signals are received in the focus region of the detector for all regions, and time periods in which the six echo signals received for different regions are focused on the focus region of the detector are different time periods. For example, a time period in which the six echo signals received through detection of a region are focused on the focus region of the detector is a first time period, a time period in which the six echo signals received through detection of another region are focused on the focus region of the detector is a second time period, and the first time period and the second time period are different time periods.
Case 3: The different time periods are time periods corresponding to echo signals returned through different times of detection of the entire object. For example, it is assumed that 120 detection signals are used to detect the entire object each time (for example, six detection signals are used to detect one region each time, and 20 regions of the object are detected in the entire field of view in total), 120 corresponding echo signals are received in the focus region of the detector for each detection, and the 120 echo signals received in each detection are used to generate a frame of image subsequently. In this case, a time period in which 120 echo signals received through a time of detection of the entire object are focused on the focus region of the detector is a first time period, a time period in which 120 echo signals received through another time of detection of the entire object are focused on the focus region of the detector is a second time period, and the first time period and the second time period are different time periods.

It should be understood that the different time periods may be alternatively configured by a person skilled in the art based on an actual requirement. For example, a time period corresponding to a part of echo signals returned through detection of a region of the object may be used as the first time period, and a time period corresponding to other echo signals returned through detection of the region of the object and a time period corresponding to echo signals returned through detection of another region of the object may be used as the second time period. There are still many possible cases of different time periods. Examples are not enumerated one by one in embodiments of this application.

### (8) Field of view region of the lidar.

A conventional lidar sets a same pixel configuration for regions on an entire detector. However, in this embodiment of this application, a user may care more about a central region than a non-central region during use of a lidar (for example, in an application scenario of a vehicle-mounted lidar, the user tends to pay more attention to a road region right in front of the lidar, and pay less attention to the sky, a road surface, or even other left and right lanes, for example, even if there is a plastic bag on the road surface, there is a bird in the sky, or there is a vehicle on the left reverse lane, there is little impact on a vehicle on a current lane, and the vehicle does not need to decelerate to give way). Therefore, based on a degree of attention of the user to different regions, a field of view region of the lidar is further partitioned in embodiments of this application. For example, FIG. 4 is an example of a schematic diagram of partitioning a field of view of a lidar according to an embodiment of this application. (A) in FIG. 4 is a schematic diagram of partitioning a vertical field of view of the lidar, and (B) in FIG. 4 is a schematic diagram of partitioning a horizontal field of view of the lidar. As shown in (A) in FIG. 4 and (B) in FIG. 4, the vertical field of view of the lidar may be partitioned into a central field of view region, an upper field of view region above the central field of view region, and a lower field of view region below the central field of view region, and the horizontal field of view may be partitioned into a central field of view region, a left field of view region on the left of the central field of view region, and a right field of view region on the right of the central field of view region. The central field of view region is predefined by a person skilled in the art based on a user requirement, and may be specifically a region within a preset angle range in front of the lidar. For example, a region to which the user pays attention in the application scenario of the vehicle-mounted lidar is analyzed, and the preset angle range may be defined as a range of an angle value between 30° to 40° from right in front of the lidar to the upper, lower, left, and right.

Currently, for a plurality of detection signals sent by the transmitting module to each region of the object, the control apparatus controls the detector to use a same pixel configuration, for example, use the 3×3 pixel configuration for all cells in the entire focus region in the manner shown in (A) in FIG. 3, or use the 3×6 pixel configuration for all cells in the entire focus region in the manner shown in (B) in FIG. 3. However, in some cases, the user pays different attention to different field of view regions of the lidar. For example, the user pays more attention to the central field of view region shown in FIG. 4 and may pay less attention to the non-central field of view region. To be specific, it is expected that the central field of view region of the lidar has high angular resolution, and the upper and lower field of view regions and the left and right field of view regions have low angular resolution. However, the control apparatus in the conventional technology sets a same pixel configuration for all field of view regions, so that the central field of view region and other field of view regions have same angular resolution. If the angular resolution is set to an excessively small value, detection precision of the central field of view region is affected, and if the angular resolution is set to an excessively large value, power consumption of the lidar is increased. It can be learned that the control method in the conventional technology cannot meet this actual requirement of the user, is not conducive to improving detection flexibility, and cannot reduce power consumption of the lidar while ensuring necessary detection precision. In addition, after the hardware configuration of the lidar is fixed, the angular resolution of the lidar is also fixed. For example, based on the control method in the conventional technology, the lidar can generate point cloud data only in the 3×3 pixel combination manner shown in (A) in FIG. 3 at most, and the angular resolution of the lidar cannot be further improved. However, the user expects to obtain higher angular resolution in some cases. In this case, the control method in the conventional technology is no longer applicable.

In view of this, this application provides a control method, to adjust a pixel configuration of a detector in a software adjustment manner based on an actual requirement, so as to flexibly improve angular resolution of a lidar for some regions, or further improve angular resolution of the lidar, and reduce power consumption of the lidar as much as possible while ensuring necessary detection precision.

It should be noted that the control method in this application may be applied to the lidar, or may be applied to another apparatus, device, or chip other than the lidar, for example, applied to another intelligent terminal, other than the lidar, having a detection function, or disposed in a component of another intelligent terminal. The component includes but is not limited to other sensors such as a controller, a chip, or a camera, and another component. Alternatively, the control method in this application may be applied to the foregoing driving scenario, or may be applied to another imaging system other than the foregoing driving scenario, for example, a three-dimensional building modeling system, a terrain mapping system, or a rendezvous and docking system. In addition, with evolution of a system architecture and emergence of a new scenario, the control method provided in this application is also applicable to a similar technical problem. This is not specifically limited in this application.

The following describes specific implementation of the control method in this application based on the lidar shown in FIG. 2 with reference to specific embodiments. It is clearly that the described embodiments are merely some rather than all of embodiments of this application.

It should be noted that the terms "system" and "network" may be used interchangeably in embodiments of this application. In addition, "a plurality of" means two or more than two. The term "and/or" describes an association relationship between associated objects and may indicate three relationships. For example, A and/or B may indicate the following cases: Only A exists, both A and B exist, and only B exists. A and B may be singular or plural. "One or more of the following items (pieces)" or a similar expression thereof indicates any combination of these items, including a single item (piece) or any combination of a plurality of items (pieces). For example, one or more items (pieces) of a, b, or c may indicate a, b, c, a and b, a and c, b and c, or a, b, and c, where a, b, and c may be in a singular form or a plural form.

Unless otherwise specified, ordinal numbers such as "first" and "second" mentioned in embodiments of this application are used to distinguish a plurality of objects, but are not used to limit priorities or importance degrees of the plurality of objects. For example, a first pixel configuration, a second pixel configuration, and a third pixel configuration are merely used to distinguish between different pixel configurations, but do not indicate different priorities, importance degrees, or the like of these pixel configurations.

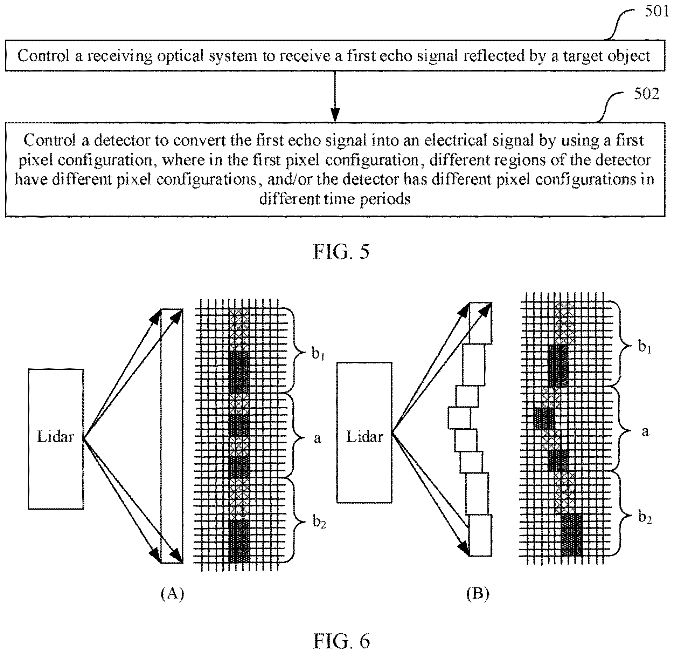

FIG. 5 is a schematic flowchart of an example of a control method according to an embodiment of this application. As shown in FIG. 5, the method includes the following steps.

Step 501: A control apparatus controls a receiving optical system to receive a first echo signal reflected by a target object.

In the foregoing step 503, the first echo signal may include a reflected signal corresponding to a first detection signal. The first echo signal may include reflected signals corresponding to all detection signals, may include only reflected signals corresponding to some detection signals, or may further include some ambient noise signals. For example, in a process of detecting an entire field of view by the lidar, the first echo signal may include reflected signals corresponding to all detection signals used to detect the entire field of view, may include reflected signals corresponding to all detection signals used to detect a region of the target object, may include reflected signals corresponding to some detection signals used to detect a region of the target object, may further include a noise signal generated because the reflected signals are reflected or refracted by a component in the lidar, or may include another ambient noise signal or the like. This is not specifically limited.

For example, the first echo signal may be presented as a spot of any shape. For example, the first echo signal may be presented as a linear spot as shown in FIG. 2. In another example, the first echo signal may be presented as a staggered spot. The staggered spot is a spot staggered in a horizontal direction and/or a vertical direction of the detector. The staggered spot includes at least two sub-spots. When the lidar scans the target object in the horizontal direction, the at least two sub-spots are staggered by a specific distance in the horizontal direction of the detector. As shown in (B) in FIG. 6, when the lidar scans the target object in the vertical direction, the at least two sub-spots are staggered by a specific distance in the vertical direction of the detector. When the lidar scans the target object in an oblique direction, the at least two sub-spots are staggered by a specific distance in a direction corresponding to the oblique direction on the detector, that is, staggered in both the horizontal direction of the detector and the vertical direction of the detector. In still another example, the first echo signal may be presented as a spot in another form, for example, a trapezoidal spot, a circular spot, or a special-shaped spot. This is not specifically limited in this application.

Step 502: The control apparatus controls the detector to convert the first echo signal into an electrical signal by using a first pixel configuration, where in the first pixel configuration, different regions of the detector have different pixel configurations, and/or the detector has different pixel configurations in different time periods.

In an optional implementation, the first pixel configuration may be written into a software version program of the lidar, and the software version program is preconfigured in the lidar before the lidar is delivered from a factory. When a user needs to update the configuration to another pixel configuration, the user may provide a requirement to a research and development personnel on a lidar side, and after the research and development personnel compiles a new software version program, the user upgrades a software version of the lidar to obtain the another pixel configuration. For example, the user may send an upgrade instruction to a master computer, and after receiving the upgrade instruction, the master computer delivers a new software version program to the control apparatus in the lidar. Alternatively, in another example, the pixel configuration may be updated in an OTA manner. For example, the user may dynamically request a new software version program by using a mobile phone or another client of the user, and install the new software version program on the lidar after obtaining the new software version program. Alternatively, the lidar may have a communication capability, for example, a short message sending and receiving capability, and the user may directly control the lidar to dynamically request a new software version program. The new software version program may include an upgraded third pixel configuration. After obtaining the third pixel configuration by parsing the new software version program, the control apparatus controls the detector to convert a third echo signal into an electrical signal by using the third pixel configuration. Specifically, the third echo signal may include a reflected signal corresponding to a third detection signal. For example, in a possible application scenario, the third echo signal may be all or some of echo signals received by the detector in a specific time period, so that the lidar can process the echo signals in the specific time period by using another pixel configuration. The specific time period may be, for example, carried in the upgrade instruction and synchronously delivered to the control apparatus, or may be a pre-agreed or preconfigured time period, for example, may be a time period within 5 milliseconds after the upgrade instruction is received, or may be a time period corresponding to detection of a region of the target object, or may be all echo signals received in a time period from a time point at which the detector receives the upgrade instruction including the third pixel configuration to a time point at which the detector receives a next upgrade instruction. This is not specifically limited. For another example, in another possible scenario, the third echo signal may alternatively be all or some of echo signals, other than the first echo signal, in all echo signals received by the detector in the current detection, so that the lidar can process different echo signals in one time of detection by using different pixel configurations. It should be understood that there are still many possible application scenarios. Examples are not enumerated one by one in embodiments of this application. In this implementation, the pixel configuration of the detector is updated in a software form. This is easy to implement without improving hardware of the lidar, and pixel configuration requirements of a user for different scenarios can be matched as much as possible, thereby helping improve flexibility of lidar detection.

In this embodiment of this application, because the detector uses different pixel configurations in different regions and/or different time periods, after receiving the first echo signal, the detector can convert, based on the different pixel configurations, the first echo signal received in the different regions or in the different time periods into differentiated electrical signals, and send the differentiated electrical signals to the processing module. In this way, after the processing module generates point cloud data based on the differentiated electrical signals, pixel density (namely, a quantity of pixels per a unit area on an image corresponding to the point cloud data) in the point cloud data can be flexibly adjusted based on an actual pixel configuration manner. Further, in the foregoing manner, the detector may be configured to implement a pixel configuration by using software. Therefore, dependency on a hardware configuration of a lidar in a detection process can be reduced, and detection flexibility can be further improved.

The following separately describes two aspects: Different regions of the detector have different pixel configurations, and the detector has different pixel configurations in different time periods.

### Different regions of the detector have different pixel configurations.

For example, the control apparatus may control quantities of cells corresponding to all pixels in pixel configurations corresponding to the different regions of the detector to be different. In this way, a total quantity of cells used to generate pixels on the detector is fixed. When the quantities of cells corresponding to all pixels in pixel configurations corresponding to the different regions are different, quantities of pixels that can be generated in different regions corresponding to the fixed quantity of cells are also different, so that pixel density in the point cloud data generated based on the first echo signals received in different regions is different, and a region with higher pixel density has more pixels in a same size range. Therefore, the region with higher pixel density also corresponds to higher angular resolution. It can be learned that in this pixel configuration manner, pixel encryption can be performed on a specific region on the finally presented point cloud data, to improve angular resolution of the specific region, and effectively improve detection flexibility.

The following describes several possible application scenarios in this pixel configuration manner.

In a possible application scenario, the different regions of the detector may be a region corresponding to a central field of view region (the central field of view region shown in FIG. 4) and a region corresponding to a non-central field of view region (including but not limited to the upper field of view region, the lower field of view region, the left field of view region, or the right field of view region shown in FIG. 4) in a focus region of the detector. Further, for example, the quantity of cells corresponding to each pixel in the pixel configuration corresponding to the central field of view region may be configured to be less than the quantity of cells corresponding to each pixel in the pixel configuration corresponding to the non-central field of view region, so that the central field of view region on the finally presented point cloud data has higher pixel density than the non-central field of view region, and the central field of view region has higher angular resolution than the non-central field of view region. This reduces unnecessary power consumption of the lidar while maintaining necessary detection accuracy of the central field of view region.

For example, FIG. 6 is an example of a schematic diagram of a pixel configuration manner of a detector according to an embodiment of this application. (A) in FIG. 6 shows a pixel configuration manner of the detector in which the first echo signal is presented as a linear spot. (B) in FIG. 6 shows a pixel configuration manner of the detector in which the first echo signal is presented as a staggered spot. For example, the staggered spot may be implemented by disposing an optical collimator in a transmitting optical system. As shown in (A) in FIG. 6 and (B) in FIG. 6, it is assumed that presentation directions of the linear spot and the staggered spot are both vertical directions, for a region a corresponding to the central field of view region in the focus region of the detector, the control apparatus may control the detector to use a 3×3 pixel configuration, that is, the detector combines, in the region a, the first echo signals on nine cells in every three rows and three columns into one electrical signal, and sends the electrical signal to the processing module. In this way, the processing module generates one pixel based on the first echo signals on the nine cells in every three rows and three columns. Correspondingly, for an upper field of view region b₁ above the central field of view region and a lower field of view region b₂ below the central field of view region that are in the focus region of the detector, the control apparatus may control the detector to use a 3×6 pixel configuration, that is, the detector combines, in the regions b₁ and b₂, the first echo signals on 18 pixels in every six rows and three columns into one electrical signal, and sends the electrical signal to the processing module. In this way, the processing module generates one pixel based on the first echo signals on the 18 pixels in every six rows and three columns. It can be learned that, in final point cloud data presentation, pixels in the central field of view region are twice as dense as pixels in the non-central field of view region. In other words, precision of angular resolution corresponding to the central field of view region is twice as high as precision of angular resolution in the non-central field of view region. In addition, compared with the linear spot, the staggered spot can be used to further reduce crosstalk between cell regions of adjacent pixels by staggering the cell regions of the adjacent pixels on the detector, thereby improving isolation between the cell regions of the adjacent pixels, and further improving point cloud quality.

It should be noted that, when the control solution in this embodiment of this application is applied to the foregoing application scenario, information about a requirement of most users in the art for a region of concern of the lidar may be first collected. The central field of view region and the non-central field of view region are defined based on the requirement information, different pixel configurations are then set for the defined central field of view region and non-central field of view region based on the foregoing solution, and then, after the software version is compiled based on a pixel configuration corresponding to the central field of view region and a pixel configuration corresponding to the non-central field of view region, the software version is encapsulated in the lidar for delivery. In addition, product descriptions of the lidar may further correspondingly include information such as a definition of the central field of view region, a definition of the non-central field of view region, a pixel configuration corresponding to the central field of view region, a pixel configuration corresponding to the non-central field of view region, pixel density corresponding to the central field of view region on the point cloud data, and pixel density corresponding to the non-central field of view region on the point cloud data. In this way, before using the lidar, the user can also read the product descriptions of the lidar to learn about related information of application of the lidar.

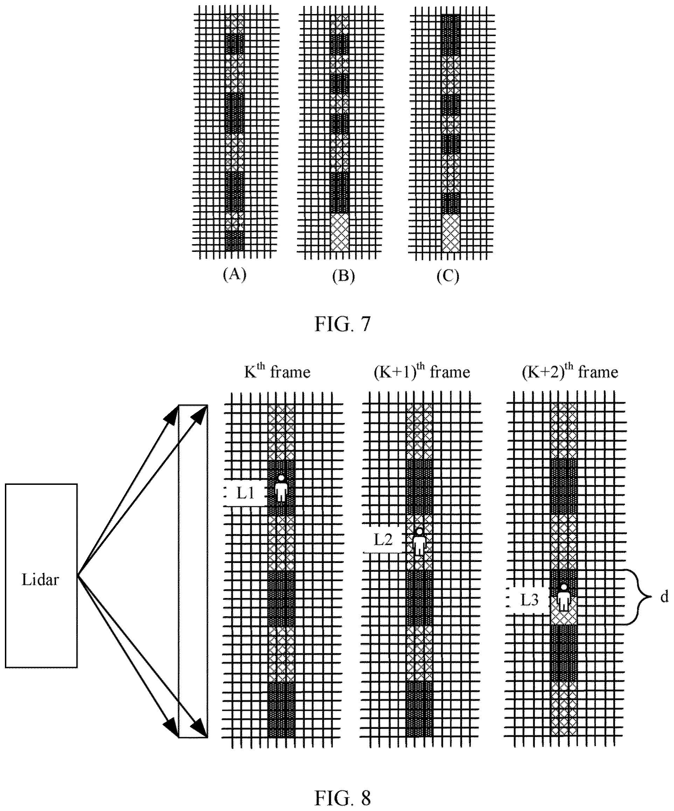

In addition, the foregoing application scenario is described merely by using an example in which a point cloud in the central field of view region is encrypted. In an actual operation, the control apparatus may further set different pixel configurations shown above for any two different sub-regions in the focus region of the detector based on an actual requirement. For example, FIG. 7 is an example of a schematic diagram of another pixel configuration manner of a detector according to an embodiment of this application. In this example, the control apparatus may set a 3×3 pixel configuration for the upper and lower regions in the focus region of the detector, and set a 3×6 pixel configuration for the central region in the focus region of the detector, as shown in (A) in FIG. 7, so as to encrypt the upper field of view region and the lower field of view region; may set a 3×3 pixel configuration for an upper half part of the focus region of the detector and set a 3×6 pixel configuration for a lower half part of the focus region of the detector, as shown in (B) in FIG. 7, so as to encrypt the upper half part of the field of view region; or may set a 3×3 pixel configuration for any several small regions in the focus region of the detector, and set a 3×6 pixel configuration for other regions, as shown in (C) in FIG. 7, so as to encrypt any several regions. There are many possible cases. Examples are not enumerated one by one in this application.

In another possible application scenario, the different regions of the detector may be a region in which the target object is presented in the focus region of the detector and a region other than the region in which the target object is presented. Further, for example, a quantity of cells corresponding to each pixel in the region in which the target object is presented on the detector may be configured to be less than a quantity of cells corresponding to each pixel in the region other than the region in which the target object is presented. The target object may be an object to which the user pays more attention. For example, when crossing a crossroad, the user pays more attention to a location of a pedestrian or a motor vehicle in the crossroad, to avoid impacting the pedestrian or the motor vehicle in a process of crossing the crossroad. In this case, the target object may be set to a pedestrian or a motor vehicle. In implementation, before controlling the detector to use the first pixel configuration, the control apparatus may further first control the detector to convert a second echo signal into an electrical signal by using a second pixel configuration. The second echo signal includes a reflected signal corresponding to the second detection signal. Specifically, the second echo signal may include a reflected signal corresponding to a detection signal emitted through scanning at least two times before the first echo signal is received. Then, after processing the electrical signal to generate point cloud data corresponding to at least two frames of images, the processing module analyzes a movement rule of the target object based on a location of the target object on the point cloud data corresponding to the at least two frames of images, then predicts, based on the movement rule, a location at which the target object is to appear in next scanning, and controls the detector to convert the first echo signal returned in the next scanning into an electrical signal by using the first pixel configuration. A quantity of cells corresponding to each pixel in the region in which the target object is presented on the detector in the first pixel configuration is less than a quantity of cells corresponding to each pixel in a region in which the target object is presented on the detector in the second pixel configuration, and a quantity of cells corresponding to each pixel in the region other than the region in which the target object is presented on the detector in the first pixel configuration may be equal to a quantity of cells corresponding to each pixel in a region other than the region in which the target object is presented on the detector in the second pixel configuration. In this way, a region corresponding to the target object on the finally presented point cloud data can have higher pixel density than a region corresponding to a non-target object, and therefore, the region corresponding to the target object has higher angular resolution than a region in which the non-target object is located. This ensures that the target object can be accurately detected, and reduces unnecessary power consumption of the lidar.

For example, FIG. 8 is an example of a schematic diagram of still another pixel configuration manner of a detector according to an embodiment of this application. As shown in FIG. 8, when the entire object is detected for a K^{th} time and the entire object is detected for a (K+1)^{th} time (K is a positive integer), the control apparatus controls the detector to perform detection by using a 3×6 pixel configuration (namely, a second pixel configuration). In this way, after a corresponding K^{th} frame of image and a corresponding (K+1)^{th} frame of image are generated, the control apparatus predicts, based on a location L₁ of a pedestrian in the K^{th} frame of image generated in K^{th} scanning and a location L₂ of the pedestrian in the (K+1)^{th} frame of image generated in (K+1)^{th} scanning, a location L₃ of the pedestrian in a (K+2)^{th} frame of image generated in (K+2)^{th} scanning, then uses a 3×3 pixel configuration for a region d corresponding to the location L₃ on the detector, and still uses the 3×6 pixel configuration (namely, a first pixel configuration) for another region other than the region d. In this way, in the region d, the detector combines first echo signals of nine cells in every three rows and three columns into one electrical signal, and sends the electrical signal to the processing module, so that the processing module generates one pixel corresponding to the nine cells in every three rows and three columns. In the another region other than the region d, the detector combines first echo signals of 18 pixels in every six rows and three columns into one electrical signal, and sends the electrical signal to the processing module, so that the processing module generates one pixel corresponding to the 18 pixels in the six rows and three columns. It can be learned that, in final point cloud presentation, pixels of a region corresponding to the target object are twice as dense as pixels of another region. In other words, precision of angular resolution of the region corresponding to the target object is twice as high as that of the another region.

In the foregoing pixel configuration manner, a quantity of cells corresponding to each pixel in a pixel configuration corresponding to a region of the detector is controlled to be less than a quantity of cells corresponding to each pixel in a pixel configuration corresponding to another region, so that pixel density in point cloud data generated for the region can be higher than pixel density in point cloud data generated based on the another region. It can be learned that in this pixel configuration manner, pixel encryption can be performed on a specific region on the finally presented point cloud data, to improve angular resolution of the specific region, and reduce unnecessary power consumption.

### The detector has different pixel configurations in different time periods.

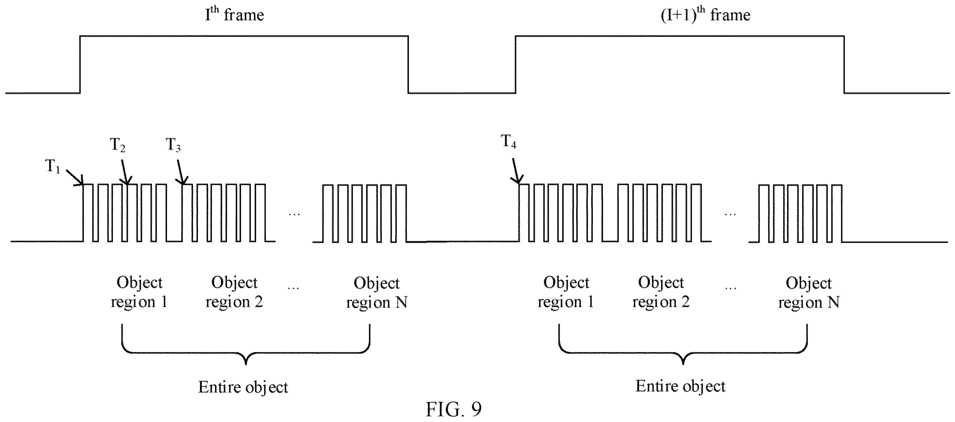

For example, that the control apparatus controls the detector to use different pixel configuration manners in different time periods may be: configuring a pixel configuration manner in a time period, and temporarily switching to another pixel configuration manner in another time period. For example, FIG. 9 is an example of a schematic diagram of an adjustment time period of a pixel configuration according to an embodiment of this application. As shown in FIG. 9, it is assumed that the control apparatus controls the transmitting optical system to transmit six detection signals each time to detect a same region of an object, and traverses an entire field of view to detect N regions (N is a positive integer). In this case, the focus region of the detector correspondingly receives six first echo signals for each region, and receives 6N first echo signals for the entire object. In an example, based on the case 1 in the foregoing term explanation (7), the control apparatus may control the detector to collect, by using one pixel configuration, any one or more first echo signals in the six first echo signals received for each region, and control the detector to collect, by using another pixel configuration, another one or more first echo signals in the six first echo signals received for the region, for example, set one pixel configuration at a moment T₁ shown in FIG. 9, and switch to another pixel configuration at a moment T₂ shown in FIG. 9. In another example, based on the case 2 in the foregoing term explanation (7), the control apparatus may control the detector to collect, by using one pixel configuration, six first echo signals received for a region, and control the detector to collect, by using another pixel configuration, six first echo signals received for another region, for example, set one pixel configuration at the moment T₁ shown in FIG. 9, and switch to another pixel configuration at a moment T₃ shown in FIG. 9. In still another example, based on the case 3 in the foregoing term explanation (7), the control apparatus may control the detector to collect, by using one pixel configuration, 6N first echo signals received through a time of detection of the entire object, and control the detector to collect, by using another pixel configuration, 6N first echo signals received through another time of detection of the entire object, for example, set one pixel configuration at the moment T₁ shown in FIG. 9 and switch to another pixel configuration at a moment T₄ shown in FIG. 9, so that one pixel configuration is used in an entire process of generating an I^{th} frame image, and another pixel configuration is used in an entire process of generating an (I+1)^{th} frame image, where I is a positive integer.

Further, for example, the control apparatus may control the focus region of the detector to use different pixel configurations in different time periods. The different pixel configurations may be that cells in a working state are not completely the same, or may be that the detector uses different cell combination manners in different time periods (that is, quantities of cells corresponding to all pixels in different pixel configurations are different). The following separately describes the two different pixel configuration manners in detail.

### Controlling different cells to be in a working state in different time periods

In this embodiment of this application, the control apparatus may control the detector to use a same pixel combination manner in different time periods, but cells in a working state in the focus region of the detector in different time periods are not completely the same. Not completely the same may mean completely different, or may mean partially the same and partially different, or may mean completely different. This is not specifically limited. For example, there is a first time period and a second time period in the different time periods. The control apparatus uses a pixel configuration 1 for the focus region of the detector in the first time period, and uses a pixel configuration 2 for the focus region of the detector in the second time period. A quantity of cells corresponding to each pixel in the pixel configuration 1 is the same as that in the pixel configuration 2. However, a cell region in which the cell in a working state in the pixel configuration 1 is located and a cell region in which the cell in a working state in the pixel configuration 2 is located are staggered in a horizontal direction and/or a vertical direction of the detector, and a staggered distance is less than a cell distance corresponding to one pixel. When the first echo signal is presented as a horizontal linear spot on the detector, the region including the cells in a working state in the pixel configuration 1 and the region including the cells in a working state in the pixel configuration 2 may be staggered in the horizontal direction of the detector. When the first echo signal is presented as a vertical linear spot on the detector, the region including the cells in a working state in the pixel configuration 1 and the region including the cells in a working state in the pixel configuration 2 may be staggered in the vertical direction of the detector. When the first echo signal is presented as an oblique linear spot on the detector, the region including the cells in a working state in the pixel configuration 1 and the region including the cells in a working state in the pixel configuration 2 may be staggered in the oblique direction of the detector, that is, staggered in both the horizontal direction and the oblique direction. In this way, there may also be a misalignment relationship between a pixel generated based on the pixel configuration 1 and a pixel generated based on the pixel configuration 2. The misalignment enables a pixel generated based on one pixel configuration to be inserted between any two adjacent pixels generated based on another pixel configuration, so as to effectively improve overall angular resolution of the region.

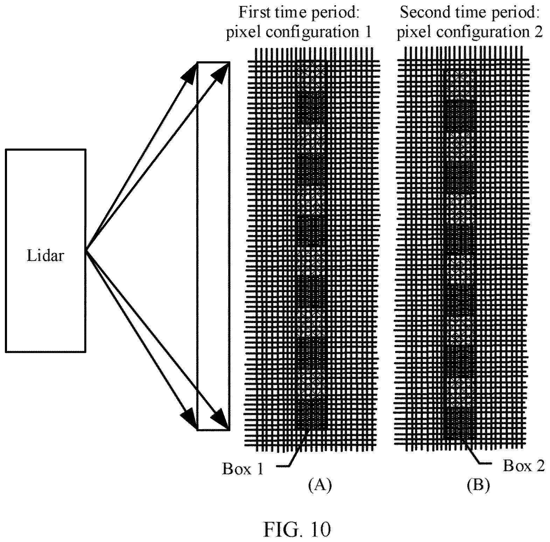

For example, it is assumed that the first echo signal is presented as a vertical linear spot, and the detector uses a 6×6 pixel configuration, FIG. 10 is an example of a schematic diagram of yet another pixel configuration manner of a detector according to an embodiment of this application. (A) in FIG. 10 shows a presentation form of the pixel configuration 1 used by the detector in the first time period, and (B) in FIG. 10 shows a presentation form of the pixel configuration 2 used by the detector in the second time period. The case 1 in the foregoing term explanation (7) is used as an example. It is assumed that the first time period is a time period corresponding to the first three first echo signals in the six first echo signals returned through detection of a same region of the object, and the second time period is a time period corresponding to the last three first echo signals in the six first echo signals. In this case, for a vertical linear region on which the six first echo signals are focused on the detector, the control apparatus controls a cell in the box 1 to be in a working state in the first time period in the manner shown in (A) in FIG. 10, and controls a cell in the box 2 to be in a working state in the second time period in the manner shown in (B) in FIG. 10. In this way, compared with the cell in the box 1 shown in (A) in FIG. 10, the cell in the box 2 shown in (B) in FIG. 10 is staggered in the vertical direction of the detector by a cell distance corresponding to a half pixel (that is, a height of three cells). In this way, the control apparatus controls the processing module to separately generate 12 pixels for the first three first echo signals received by the cell in the box 1 and the last three first echo signals received by the cell in the box 2, and the 12 pixels correspondingly generated in the box 2 are exactly inserted between any two adjacent pixels correspondingly generated in the box 1. In this way, the final point cloud data generated by the lidar through detection of the region of the object includes 24 pixels, and therefore, vertical angle resolution of the point cloud data generated through detection of the region can be doubled.

It should be noted that, the foregoing scenario is described by using only an example in which different pixel configurations are used in two time periods. In an actual operation, different pixel configurations may be respectively used in three or more time periods, and at least two misalignment relationships described in the foregoing content exist between the three or more pixel configurations. For example, it is assumed that six first echo signals are received in a same vertical linear region, the control apparatus may configure the pixel configuration 1 shown in (A) in FIG. 10 for the detector in a time period in which the first two first echo signals are received; configure a pixel configuration 3 for the detector in a time period in which the middle two first echo signals are received, where compared with the region in which the cell in a working state in the pixel configuration 1 is located, a region in which a cell in a working state in the pixel configuration 3 is located is staggered in the vertical direction of the detector by a cell distance corresponding to 1/3 pixels (for example, staggered by a height of two cells when a 6×6 pixel configuration is used); and configure a pixel configuration 4 for the detector in a time period in which the last two first echo signals are received, where compared with the region in which the cell in a working state in the pixel configuration 3 is located, a region in which the cell in a working state in the pixel configuration 4 is located is further staggered in the vertical direction of the detector by a cell distance corresponding to 1/3 pixels. In this way, each pixel can be generated comprehensively based on detection results of two first echo signals, thereby effectively improving precision of each pixel on the point cloud, and a pixel generated based on the middle two first echo signals can be inserted, through two times of misplacement, at a 1/3 location of any two pixels generated based on the first two first echo signals, while a pixel generated based on the last two first echo signals are inserted at a 2/3 location of any two pixels generated based on the first two first echo signals. In other words, pixel density can be increased by two times, so that vertical angle resolution of point cloud data generated through detection of the region of the object is increased by two times.

It can be learned that, in the foregoing staggered pixel configuration manner, even if a hardware configuration of the lidar is fixed, and angular resolution of the lidar cannot be further improved by relying on hardware, a misalignment relationship can still be configured, by using software, between cells in a working state on the detector in different time periods, so as to further improve the angular resolution of the lidar. For example, when a point cloud can be generated only in the 3×3 pixel configuration manner at most due to the hardware configuration of the lidar, it means that the lidar can generate a maximum of 12 pixels as shown in FIG. 10. Based on the foregoing staggered pixel configuration manner, more pixels can be further inserted into the point cloud data by inserting pixels in a staggered manner, so that the lidar can further improve angular resolution of the lidar without being limited by hardware.

It should be understood that, in FIG. 10, how to improve vertical angle resolution of a region is described merely by using an example in which the first echo signal is presented as a vertical linear spot. This pixel configuration manner may also be applicable to a scenario in which the first echo signal is presented as a non-vertical linear spot. For example, when the first echo signal is presented as a horizontal linear spot, in this pixel configuration manner, a region including cells in a working state can be staggered in the horizontal direction of the detector, to improve horizontal angle resolution of a region. When the first echo signal is presented as an oblique linear spot, in the pixel configuration manner, a region including cells in a working state can be staggered in the horizontal direction and the vertical direction of the detector, to improve both vertical angle resolution of a region and horizontal angle resolution of the region. For a related implementation, refer to FIG. 10. Details are not described herein again.

In addition, the foregoing describes only possible examples of the staggered pixel configuration by using different time periods shown in case 1 in the term explanation (7) as an example. In another example, the staggered pixel configuration may alternatively be configured in different time periods in the case 2 or the case 3 in the term explanation (7) in a same manner. For example, when a staggered pixel configuration is configured in different time periods corresponding to the first echo signal received through detection of different regions in the case 2 in the term explanation (7), there can be a misalignment relationship between pixels in different image regions in finally generated image. When a staggered pixel configuration is configured in different time periods corresponding to the first echo signal received through different times of detection of the entire object in the case 3 in the term explanation (7), there can be a misalignment relationship between pixels in different finally generated images. For a specific implementation process, refer to the foregoing content. Details are not described in this embodiment of this application.

### Using different cell combination manners in different time periods

In this embodiment of this application, the control apparatus may control all cells in the focus region of the detector to be in a working state, but quantities of cells corresponding to all pixels in the pixel configurations used in different time periods are different. For example, there is a first time period and a second time period in the different time periods. The control apparatus uses the pixel configuration 1 for the focus region of the detector in the first time period, and uses the pixel configuration 2 for the focus region of the detector in the second time period. A cell in a working state in the pixel configuration 1 is the same as a cell in a working state in the pixel configuration 2, but a quantity of cells corresponding to each pixel in the pixel configuration 1 is greater than a quantity of cells corresponding to each pixel in the pixel configuration 2. In this way, a quantity of pixels in the point cloud data generated based on the pixel configuration 2 is also greater than a quantity of pixels in the point cloud data generated based on the pixel configuration 1. In this way, angular resolution of detecting the object can be improved in a required time period based on an actual requirement.

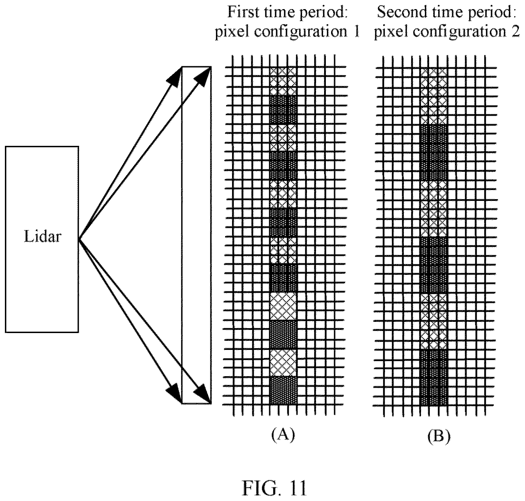

For example, it is assumed that the first echo signal is presented as a vertical linear spot, FIG. 11 is an example of a schematic diagram of still yet another pixel configuration manner of a detector according to an embodiment of this application. (A) in FIG. 11 shows a presentation form of the pixel configuration 1 used by the detector in the first time period, and (B) in FIG. 11 shows a presentation form of the pixel configuration 2 used by the detector in the second time period.

Based on the case 1 in the foregoing term explanation (7), it is assumed that the first time period is a time period corresponding to the first three echo signals in the six first echo signals returned through detection of a same region of the object, and the second time period is a time period corresponding to the last three first echo signals in the six first echo signals, for a vertical linear region on which the six first echo signals are focused on the detector, the control apparatus uses a 3×3 pixel combination manner shown in (A) in FIG. 11 in the first time period, and uses a 3×6 pixel combination manner in the manner shown in (B) in FIG. 11 in the second time period. In this way, the control apparatus controls the processing module to generate 12 pixels for the first three first echo signals, and generate six pixels for the last three first echo signals. In addition, the 6 pixels generated for the last three first echo signals are exactly inserted between any two pixels generated for the first three first echo signals, so that 18 pixels in total are generated for the region. It can be learned that in this pixel configuration manner, angular resolution of point cloud data generated through detection of a region can also be further improved without being limited by hardware.

Based on the case 2 in the foregoing term explanation (7), it is assumed that the first time period is a time period corresponding to six first echo signals returned through detection of a region of the object, and the second time period is a time period corresponding to six first echo signals returned through detection of another region of the object, for a vertical linear region on which the 12 first echo signals are focused on the detector, the control apparatus uses the 3×3 pixel combination manner in the manner shown in (A) in FIG. 11 in the first time period, and uses the 3×6 pixel combination manner in the manner shown in (B) in FIG. 11 in the second time period. In this way, the control apparatus controls the processing module to generate point cloud data for a region, where the point cloud data includes 12 pixels, and point cloud data generated for another region includes 6 pixels. It can be learned that in this pixel configuration manner, angular resolution of detecting a specific region of the object can be improved.

Based on the case 3 in the foregoing term explanation (7), it is assumed that the first time period is a time period corresponding to 6N first echo signals returned through a time of detection of the entire object, and the second time period is a time period corresponding to 6N first echo signals returned through another time of detection of the entire object, for a vertical linear region on which the 12N first echo signals are focused on the detector, the control apparatus uses the 3×3 pixel combination manner in the manner shown in (A) in FIG. 11 in the first time period, and uses the 3×6 pixel combination manner in the manner shown in (B) in FIG. 11 in the second time period. In this way, the control apparatus controls the processing module to generate an image through a time of detection, where the image evenly includes 12N pixels, and an image generated through another time of detection evenly includes 6N pixels. It can be learned that in this pixel configuration manner, angular resolution of detecting the entire object at a time can be improved.

It can be learned that, in the foregoing pixel configuration manner, the lidar may further switch a pixel configuration in a specific time period based on an actual requirement, to flexibly adapt to more scenarios, and further flexibly improve angular resolution. For example, the lidar may further improve angular resolution of the lidar without being limited by hardware, or the lidar may have higher angular resolution when detecting a region of the object, or the lidar may have higher angular resolution when detecting the object at a time.

It should be noted that, the pixel configurations shown above may alternatively be used in combination. For example, when different pixel configurations are configured for different time periods, in a pixel configuration configured for a time period, different pixel configurations may be further performed on different sub-regions in the focus region of the detector. Alternatively, when different pixel configurations are configured for different time periods, in one aspect, different cells in a working state in two time periods may be configured, and in another aspect, different pixel combination manners may be further used in the two time periods, and the like. There are many possible combination manners. Examples are not enumerated one by one in embodiments of this application.

It should be understood that the control method provided in this application may be further extended to any information system that has a requirement for angular resolution. It should be understood that all technical solutions for improving the angular resolution by using the control solution provided in this application fall within the protection scope of this application. Examples are not enumerated one by one in this application.

According to the control solution provided in embodiments of this application, this application further provides a control apparatus, including at least one processor and an interface circuit. The interface circuit is configured to provide data or code instructions for the at least one processor, and the at least one processor is configured to implement the method performed by the foregoing control apparatus by using a logic circuit or by executing the code instructions.

According to the control solution provided in embodiments of this application, this application further provides a lidar, including a control apparatus, a receiving optical system, and a detector. The control apparatus is configured to perform the control method performed by any control apparatus in the foregoing embodiments, the receiving optical system is configured to receive an echo signal, and the detector is configured to convert the echo signal into an electrical signal.

In a possible design, the lidar may further include a transmitter and a transmitting optical system. The transmitter is configured to emit a detection signal under control of the control apparatus, and the transmitting optical system is configured to transmit the detection signal.

In a possible design, the detector includes an SPAD detector array.

In a possible design, the lidar may further include a scanning mechanism, where the scanning mechanism includes one or more of a multi-faceted rotating mirror, an oscillating mirror, an MEMS scanning mirror, or a prism.

In a possible design, the lidar may further include a processing module, where the processing module is configured to process the electrical signal to obtain point cloud data.

In a possible design, the processing module may further determine a target feature based on the point cloud data.

In a possible design, the control apparatus and the processing module may be integrated into a system on chip SOC.

According to the control solution provided in embodiments of this application, this application further provides a terminal device, including the lidar described in the foregoing content. Examples of some terminal devices include but are not limited to: a smart home device (for example, a television, a robotic vacuum cleaner, a smart desk lamp, a speaker system, an intelligent lighting system, an electric appliance control system, a home background music system, a home theater system, an intercom system, or a video surveillance system), an intelligent transportation device (for example, a vehicle, a ship, an unmanned aerial vehicle, a train, a freight car, or a truck), an intelligent manufacturing device (for example, a robot, an industrial device, intelligent logistics, or a smart factory), and an intelligent terminal (a mobile phone, a computer, a tablet computer, a palmtop computer, desktop computer, a headset, a speaker, a wearable device, a vehicle-mounted device, a virtual reality device, an augmented reality device, or the like).

According to the control solution provided in embodiments of this application, this application further provides a computer-readable storage medium. The computer-readable storage medium stores a computer program, and when the computer program is run, the method performed by the control apparatus in the foregoing content is performed.

According to the control solution provided in embodiments of this application, this application further provides a computer program product. When the computer program product runs on a processor, the method performed by the control apparatus in the foregoing content is implemented.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that various illustrative logical blocks (illustrative logical block) and steps (step) described with reference to embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be positioned in one position, or may be distributed on a plurality of network units. Some or all of the units may be selected based on actual requirements to achieve the objectives of the solutions in embodiments.

In addition, function units in embodiments of this application may be integrated into one processing unit, or each of the units may exist alone physically, or two or more units are integrated into one unit.

When the functions are implemented in the form of a software function unit and sold or used as an independent product, the functions may be stored in a computer-readable storage medium. Based on this understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A control method, comprising:
controlling a receiving optical system to receive a first echo signal reflected by a target object; and
controlling a detector to convert the first echo signal into an electrical signal by using a first pixel configuration, wherein
in the first pixel configuration, different regions of the detector have different pixel configurations, and/or the detector has different pixel configurations in different time periods.

2. The method according to claim 1, wherein the first echo signal is presented as a linear spot or a staggered spot, and the staggered spot is a spot staggered in a horizontal direction and/or a vertical direction of the detector.

3. The method according to claim 1 or 2, wherein the different regions of the detector are a region corresponding to a central field of view region of a lidar in the detector and a region corresponding to a non-central field of view region, and the central field of view region is a region within a preset angle range in front of the lidar.

4. The method according to claim 3, wherein a quantity of cells corresponding to each pixel in a pixel configuration corresponding to the central field of view region is less than a quantity of cells corresponding to each pixel in a pixel configuration corresponding to the non-central field of view region.

5. The method according to any one of claims 1 to 4, wherein the different regions of the detector are a region in which the target object is presented in the detector and a region other than the region in which the target object is presented; and
before the controlling a detector to convert the first echo signal into an electrical signal by using a first pixel configuration, the method further comprises:
controlling the detector to convert a second echo signal into an electrical signal by using a second pixel configuration, wherein
for the region in which the target object is presented in the detector, a quantity of cells corresponding to each pixel in the first pixel configuration is less than a quantity of cells corresponding to each pixel in the second pixel configuration, and for the region other than the region in which the target object is presented in the detector, a quantity of cells corresponding to each pixel in the first pixel configuration is equal to a quantity of cells corresponding to each pixel in the second pixel configuration.

6. The method according to any one of claims 1 to 5, wherein the different time periods comprise a first time period and a second time period, the first time period corresponds to a pixel configuration 1, the second time period corresponds to a pixel configuration 2, quantities of cells corresponding to all pixels in the pixel configuration 1 and the pixel configuration 2 are the same, a region comprising cells in a working state in the pixel configuration 1 and a region comprising cells in a working state in the pixel configuration 2 are staggered in the horizontal direction and/or the vertical direction of the detector, and a staggered distance is less than a cell distance corresponding to one pixel.

7. The method according to any one of claims 1 to 5, wherein the different time periods comprise a first time period and a second time period, the first time period corresponds to a pixel configuration 1, the second time period corresponds to a pixel configuration 2, cells in a working state in the pixel configuration 1 and the pixel configuration 2 are the same, and a quantity of cells corresponding to each pixel in the pixel configuration 1 is greater than a quantity of cells corresponding to each pixel in the pixel configuration 2.

8. The method according to any one of claims 1 to 7, wherein
the different regions of the detector are different sub-regions, on the detector, in a region on which the first echo signal is focused; or
the different time periods are any one of the following time periods:
time periods corresponding to different first echo signals returned through detection of a same region of the target object;
a time period corresponding to a first echo signal returned through detection of different regions of the target object; or
time periods corresponding to first echo signals returned through different times of detection of the entire target object.

9. The method according to any one of claims 1 to 8, wherein the method further comprises:
receiving an upgrade instruction, wherein the upgrade instruction comprises a third pixel configuration; and
controlling the detector to convert a third echo signal into an electrical signal by using the third pixel configuration.

10. Alidar, comprising a control apparatus, a receiving optical system, and a detector, wherein the control apparatus is configured to perform the control method according to any one of claims 1 to 9;
the receiving optical system is configured to receive an echo signal; and
the detector is configured to convert the echo signal into an electrical signal.

11. The lidar according to claim 10, further comprising a transmitter and a transmitting optical system, wherein
the transmitter is configured to emit a detection signal under control of the control apparatus; and
the transmitting optical system is configured to transmit the detection signal.

12. The lidar according to claim 10 or 11, wherein the detector comprises a single photon avalanche diode SPAD detector array.

13. The lidar according to any one of claims 10 to 12, wherein the lidar further comprises a scanning mechanism, and the scanning mechanism comprises one or more of a multi-faceted rotating mirror, an oscillating mirror, a micro-electro-mechanical system (micro-electro-mechanical system, MEMS) scanning mirror, or a prism.

14. The lidar according to any one of claims 10 to 13, further comprising a processing module, wherein the processing module is configured to process the electrical signal to obtain point cloud data.

15. The lidar according to claim 14, wherein the processing module is further configured to determine a target feature based on the point cloud data.

16. The lidar according to claim 14 or 15, wherein the control apparatus and the processing module are integrated into a system on chip SOC.

17. A terminal device, comprising the lidar according to any one of claims 10 to 16.

18. A computer-readable storage medium, wherein the computer-readable storage medium stores a computer program, and when the computer program is run, the method according to any one of claims 1 to 9 is performed.

19. A computer program product, wherein when the computer program product runs on a processor, the method according to any one of claims 1 to 9 is implemented.
